# EUROPÄISCHE PATENTSCHRIFT

(11) **EP 1 875 170 B1**
(45) Veröffentlichungstag und Bekanntmachung des Hinweises auf die Patenterteilung: **30.07.2008**
(21) Anmeldenummer: 06723796.6
(22) Anmeldetag: 29.03.2006
(51) Int. Cl.: G01D 3/028, F16K 37/00

(54) **WEGSENSOR UND VENTIL**
PATH SENSOR AND VALVE
CAPTEUR DE DEPLACEMENT ET VALVE

(30) Priorität: 22.04.2005 DE 102005018797
(43) Veröffentlichungstag der Anmeldung: 09.01.2008
(73) Patentinhaber: Bosch Rexroth AG, 70184 Stuttgart (DE)
(72) Erfinder: THIERBACH, Peter, 71634 Ludwigsburg (DE)
(86) Internationale Anmeldenummer: PCT/EP2006/002827
(87) Internationale Veröffentlichungsnummer: WO 2006/111250

(56) Entgegenhaltungen:
- WO-A-01/13070
- DE-A1- 3 127 470

## Beschreibung

Die Erfindung betrifft einen Wegsensor gemäß dem Oberbegriff des Anspruchs 1, zum Messen der Position eines ersten Körpers relativ zu einem zweiten Körper. Die Erfindung betrifft ferner ein Ventil, das mit einem solchen Wegsensor versehen ist.

Ein induktiver Wegaufnehmer in Differenzialtransformatofausführung zur Messung der Position eines Stellglieds in einem hydraulischen Wege-, Druck- oder Stromventil ist in der DE 31 27 470 C2 beschrieben. In einem zum Ventil hin offenen Druckrohr ist ein magnetischer Kern beweglich geführt. Der Kern ist mit dem Stellglied verbunden. Auf das Druckrohr ist ein Spulenträger für die Magnetspulen aufgeschoben. Der Spulenträger liegt an seinem ventilseitigen Ende an einem Anschlag an. Der Anschlag ist gegenüber dem Wegaufnehmergehäuse über ein Schneckengetriebe verschiebbar. Mit dem Schneckengetriebe lässt sich die Nullpunktlage der Wegaufnehmerkennlinie relativ zum Hub des Stellglieds abgleichen. Eine zur Primärspule in Reihe geschaltete Stelldrossel gestattet es, die Steilheit der Kennlinie einzustellen.

Spulenträger sind häufig als Kunststoffspritzteil gefertigt. Solche Spulenträger sind einfach herstellbar und hinsichtlich ihrer magnetischen und elektrischen Eigenschaften gut zur Befestigung der Messspulen geeignet. Verwendet man in der oben beschriebenen Ausführung eines induktiven Wegäufnehmers einen Kunststoffspulenträger, so tritt das Problem auf, dass sich bei einer Temperaturänderung die Nullpunktlage der Kennlinie verschiebt und eine Nachjustierung erforderlich ist falls man diese Verschiebung nicht in Kauf nehmen möchte.

Allgemein betrachtet führen unterschiedliche Wärmeausdehnungskoeffizienten der verschiedenen Komponenten des Messsystems dazu, dass sich bei einer Temperaturänderung die Messspulen gegenüber dem Kern verschieben. Da sich das Wegsignal in vereinfachter Betrachtung aus dem Versatz zwischen einem Referenzpunkt der Spulenanordnung und einem Referenzpunkt des Kerns ergibt, tritt die besagte Verschiebung der Nullpunktlage auf.

Bei der Steuerung und Überwachung von Ventilen ist eine Verschiebung der Nullpunktlage der Wegsensorkennlinie unerwünscht und mitunter sogar sicherheitskritisch. So soll bei Wegeventilen eine unbetätigte Mittelstellung des Ventils zuverlässig durch den Nullpunkt des Wegsignals angezeigt werden. Eine falsches Wegsignal führt hier unter Umständen zu einer irrtümlichen Betätigung des Ventils und eines daran angeschlossenen hydraulischen Verbrauchers. Ist der Wegsensor Teil einer Ventilhubregelung, führt ein falsches Wegsignal zu einer Fehlfunktion des Regelkreises.

Das gleiche Problem tritt auch bei anderen Messsystemen, zum Beispiel bei einem Potentiometerwegsensor, auf. Unterschiedliche Wärmeausdehnungskoeffizienten der verschiedenen Komponenten des Messsystems führen hier zu einer Verschiebung der Widerstandsbahn gegenüber dem Schleifer, so dass eine Verschiebung der Kennlinie resultiert.

Einen induktive Weggeber mit einer Auswerteschaltung, die eine Temperaturkompensation durchführt, beschreibt die WO-A-01/13070. Ein Anker, der relativ zu einer Spule beweglich angeordnet ist, beeinflusst die Induktivität der Spule. Die Spule wird mit einer Gleichspannung und einer der Gleichspannung überlagerten Wechselspannung beaufschlagt. Aus dem über der Spule abfallenden Gleichspannungsanteil wird die Temperatur der Spule bestimmt. Der Wechselspannungsanteil ist ein Maß für die Position des Ankers. Im weiteren Auswerteverfahren wird die Position anhand der gemessenen Spulentemperatur korrigiert.

Eine elektronische Temperaturkompensation erfordert eine aufwendige Auswerteschaltung, und erhöht dadurch die Kosten des Messsystems.

Es ist die Aufgabe der vorliegenden Erfindung einen verbesserten Wegsensor anzugeben, dessen Kennlinie eine nur geringe Temperaturabhängigkeit aufweist. Es ist eine weitere Aufgabe, ein Ventil anzugeben, bei dem eine Ventilstellung zuverlässig messbar ist.

Diese Aufgabenstellung wird erfindungsgemäß durch einen Wegsensor mit den Merkmalen des Patentanspruchs 1 bzw. durch ein Ventil mit den Merkmalen des Patentanspruchs 15 gelöst.

Erfindungsgemäß weist ein Wegsensor ein erstes Bauteil und ein zweites Bauteil auf, die an einen ersten bzw. einen zweiten Körper gekoppelt sind, um die Position des ersten Körpers relativ zum zweiten Körper durch ein Wegsignal anzugeben. Die Bauteile weisen unterschiedliche Wärmeausdehnungskoeffizienten auf. Am ersten Körper ist ein Referenzpunkt vorgegeben, durch dessen Lage gegenüber dem zweiten Bauteil das Wegsignal bestimmt ist. Ein solcher Referenzpunkt leitet sich in der Regel aus den konstruktiven Gegebenheiten der Bauteile und dem Funktionsprinzip des Wegsensors ab. Bei einem Differentialspulensensor oder einem Differentialtransformatorsensor ist dies beispielsweise die Mitte eines magnetischen Kernstababschnitfs. In einer bevorzugten Position des ersten Körpers hinsichtlich des zweiten Körpers liegt der Referenzpunkt einem vorgegebenen mittleren Abschnitt des zweiten Bauteils gegenüber. Das zweite Bauteil ist ausschließlich über diesen vorgegebenen Abschnitt an den zweiten Körper mechanisch gekoppelt.

Dadurch ist das zweite Bauteil hinsichtlich des vorgegebenen Abschnitts in seiner Lage zum zweiten Körper festgelegt. Durch Wärmeausdehnung ändert das zweiten Bauteil zwar seine Länge, diese Längenänderung beeinflusst jedoch nicht die Lage des vorgegebenen Abschnitts. Somit erhält man auf einfachste Weise ein temperaturstabiles Wegsignal für eine bevorzugte relative Position der zwei Körper.

Gemäß einem weiteren Aspekt der Erfindung umfasst ein Ventil den erfindungsgemäß ausgestalteten Wegsensor für die Messung der Position des Stellglieds innerhalb des Ventils. So lässt sich eine bevorzugte Ventilstellung zuverlässig und temperaturunabhängig messen.

Aufgrund der Kennlinie, durch die sich Auslenkungen in gegensätzlicher Richtung unterschieden lassen, umfasst eine besonders bevorzugte Ausführungsform eines Ventils einen induktiven Wegsensor. Der erfindungsgemäß gestaltete Wegsensor erlaubt es insbesondere, die unbetätigte Mittelstellung eines Wegeventils zuverlässig und temperaturunabhängig anzugeben.

Weitere vorteilhafte Ausgestaltungen sind in den Unteransprüchen angegeben.

Gemäß einer bevorzugten Weiterbildung ist das zweite Bauteil über ein Kopplungselement, dessen Wärmeausdehnung hinsichtlich der Wegmessung vernachlässigbar klein ist, an den zweiten Körper gekoppelt.

Ist auch das erste Bauteil über ein Kopplungselement an den ersten Körper gekoppelt, so weisen die beiden Kopplungselemente vorzugsweise den gleichen Wärmeausdehnungskoeffizienten auf. Dadurch kompensiert sich der Einfluss der Längenausdehnung der Kopplungselemente auf das Wegsignal von selbst.

Eine bevorzugte Ausgestaltung bezieht sich auf einen induktiven Wegsensor mit den Merkmalen des Anspruchs 4, wobei das zweite Bauteil eine Spule mit einem hohlzylindrischen Spulenkörper umfasst. Ein Befestigungsabschnitt, der in Längsrichtung mittig am Spulenkörper angeordnet ist, erlaubt die Kopplung an den zweiten Körper. Dadurch kann der mittlere Abschnitt des Spulenkörpers in konstantem Abstand zum zweiten Körper gehalten werden. Steht der Stabkern dem mittleren Abschnitt des Spulenkörpers gegenüber, ist die gemessene Position temperaturkompensiert.

Eine besonders einfache Fertigung und Montage des Spulenkörpers lässt sich erzielen, wenn der Befestigungsabschnitt flanschartig vom Spulenkörper vorsteht und gegebenenfalls mit dem Spulenträger einstückig ausgebildet ist.

Gemäß einer besonders bevorzugten Weiterbildung ist der induktive Wegsensor als Differentialspulensensor gemäß den Merkmalen des Anspruchs 9 ausgestaltet. Ein solcher Wegsensor erzeugt ausgehend von einer Mittelstellung je nach Auslenkungsrichtung Wegsignale mit positivem und negativem Vorzeichen. Der Nullpunkt der Kennlinie entspricht dabei einer Mittelstellung eines magnetischen Kernstababschnitts hinsichtlich des Spulenkörpers. Durch Befestigen des Spulenkörpers an seinem mittleren Abschnitt wird auf besonders einfache Weise eine Verschiebung der Kennliniennullpunktslage durch Temperaturgang verhindert.

In gleicher Weise wird bei einem Differentialtransformatorsensor, der gemäß den Merkmalen des Anspruchs 11 ausgestaltet ist, eine Verschiebung der Kennliniennullpunktslage verhindert.

Wenn die Primärspule in zwei Spulenabschnitte aufgeteilt ist, lässt sich der Spulenkörper mit dem Befestigungsabschnitt einfach fertigen.

Eine weitere Ausgestaltung des Wegsensors kann als Potentiometerwegsensor gemäß den Merkmalen des Anspruchs 14 erfolgen. Dadurch kann trotz mitunter erheblicher Wärmeausdehnung der elektrischen Widerstandsbahn eine bevorzugte Position zuverlässig und temperaturunabhängig gemessen werden.

Nachfolgend werden die vorliegende Erfindung und deren Vorteile unter Bezugnahme auf die in den Figuren dargestellten Ausführungsbeispiele näher erläutert.

Es zeigen:
- Fig. 1: ein schematisches Schnittbild eines Hydraulikventils mit einem darauf angeordneten induktiven Wegsensor in Differentialspulenkonfiguration,
- Fig. 2: ein schematisches Schnittbild eines Hydraulikventils mit einem darauf angeordneten induktiven Wegsensor in Differentialtransformatorkonfiguration,
- Fig. 3a: eine einfache Auswerteschaltung eines Differentialspulenwegsensors,
- Fig. 3b: eine einfache Auswerteschaltung eines Differentialtransformatorwegsensors,
- Fig. 4: ein schematisches Schnittbild eines Hydraulikventils mit einem in eine Bohrung des Ventilgehäuses vorstehenden Diflerentialspulenwegsensor und
- Fig. 5: eine schematische Darstellung eines Potentiometerwegsensors.

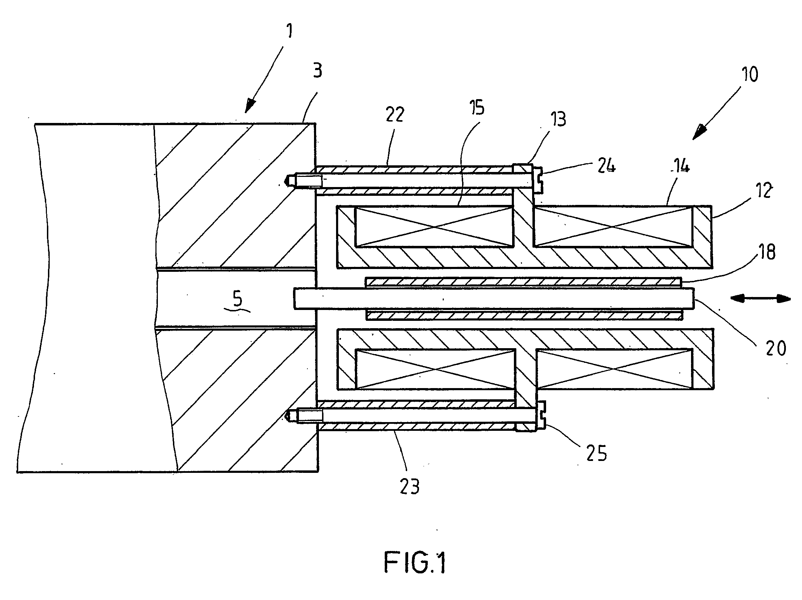

Die Figur 1 zeigt eine schematische Abbildung eines Hydraulikventils mit einem darauf angeordneten Wegsensors. Das Ventil 1 besitzt ein Gehäuse 3 und ein in dem Gehäuse 3 beweglich geführtes Stellglied 5. Über das Stellglied 5 werden innerhalb des Ventilgehäuses 3 Druckmittelverbindungen gesteuert.

Der auf dem Ventilgehäuse 3 befestigte Wegsensor 10 ist ein induktiver Wegsensor, der nach dem Differenzialspulenprinzip arbeitet. Ein Spulenträger 12 bildet zusammen mit zwei darauf angeordneten Spulen 14 und 15 einen hohlzylindrischen Spulenkörper. Entlang dessen Zylinderachse steht ein Stabkern in den durch den Spulenkörper gebildeten Hohlraum vor. Der Stabkern ist durch einen Stab 20 aus nicht ferromagnetischem Metall und durch eine Hülse 18 aus ferromagnetischem Material gebildet. Der Spulenträger 12 ist in einfacher Weise als einstückiges Kunststoffspritzteil mit einem daran ausgebildeten Befestigungsabschnitt 13 hergestellt. Die Spulen 14 und 15 sind in den am Spulenträger 12 gebildeten Vertiefungen angeordnet.

Der Stab 20 des Stabkerns ist direkt am Stellglied 5 befestigt. Der Spulenkörper ist über den Befestigungsabschnitt 13, der flanschartig vom Spulenkörper vorsteht, über zwei Befestigungsbuchsen 22 und 23 und entsprechende Schrauben 24 und 25 am Ventilgehäuse 3 angebracht. Die Befestigungsbuchsen und die Schrauben sind aus Metall gefertigt und weisen nur einen geringen Wärmeausdehnungskoeffizienten auf. Der Spulenträger, der aus Kunststoff gefertigt ist, besitzt hingegen einen hohen Wärmeausdehnungskoeffizienten, so dass sich der Spulenkörper bei einer Temperaturänderung entlang seiner Zylinderachse merklich dehnen kann.

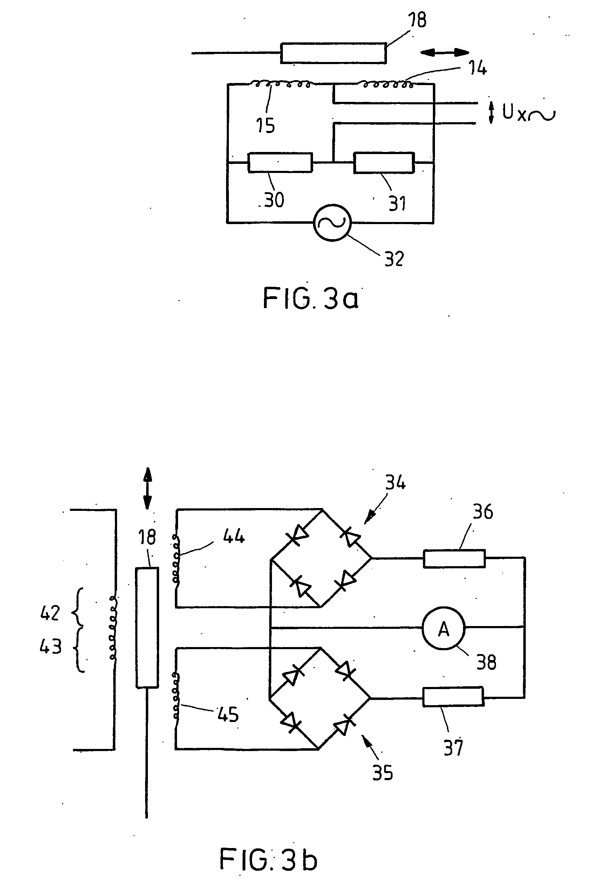

Eine einfache Auswertungsschaltung für einen Differenzialspulenwegsensor ist in der Figur 3a beschrieben. Die Spulen 14 und 15 sind in Reihe geschaltet. Die Induktivität dieser Spulen wird durch die Lage der Stabkernhülse 18 beeinflusst. Parallel zu den Spulen 14 und 15 sind zwei Referenzwiderstände 30 und 31 in Reihe geschaltet. Die Messanordnung wird von einer Spannungsquelle 32 mit einer Wechselspannung beaufschlagt. Ein Messsignal Ux wird zwischen den Spulen einerseits und zwischen den Referenzwiderständen andererseits abgegriffen.

Das durch diese Auswerteschaltung erhaltene Wegsignal ist im Wesentlichen durch die Lage der Stabkernhülse 18 in Relation zu der Spulenanordnung 14, 15 bestimmt. In einer vereinfachten Betrachtung lässt sich der Stabkernhülse 18 ein Referenzpunkt zuordnen, der die Hülsenmitte angibt. Auch der Spulenanordnung 14, 15 kann ein Referenzpunkt zugewiesen werden. Dieser Referenzpunkt gibt die Mitte der Spulenanordnung 14, 15 hinsichtlich der Zylinderachse des Spulenkörpers an. Das Messsignal ist in dieser Betrachtungsweise durch den Versatz des Referenzpunktes der Stabkernhülse 18 gegenüber dem Referenzpunkt der Spulenanordnung 14, 15 bestimmt.

Durch die in Figur 1 gezeigte Befestigung des Spulenkörpers lässt sich eine Verschiebung des Referenzpunkts der Spulenanordnung 14, 15 durch Temperaturgang weitestgehend vermeiden. Da sich der Befestigungsabschnitt 13 in der Mitte der Spulenanordnung 14, 15 befindet, verändert der Referenzpunkt der Spulenanordnung 14, 15 seine Lage hinsichtlich des Ventilgehäuses 3 auch bei einer Temperaturänderung kaum, selbst wenn sich der Spulenkörper aufgrund der Temperaturänderung dehnt. Somit lässt sich eine durch Temperaturgang bedingte Verschiebung der Signalkennlinie vermeiden oder zumindest stark verringern.

Idealerweise sind die Befestigungsbuchsen 22 und 23, die Schrauben 24 und 25 und der Stab 20 aus dem gleichen Material gefertigt, oder aus Materialien die einen sehr ähnlichen Wärmeausdehnungskoeffizient besitzen. Dann verschiebt sich der Referenzpunkt der Stabkernhülse 18 gegenüber dem Referenzpunkt des Spulenkörpers auch bei einer Änderung der Temperatur nicht. Somit kennzeichnet der Nullpunkt der Kennlinie dieses Wegsensors in zuverlässiger und temperaturunabhängiger Weise stets die gleiche Lage des Stellglieds 5 innerhalb des Ventilgehäuses 3.

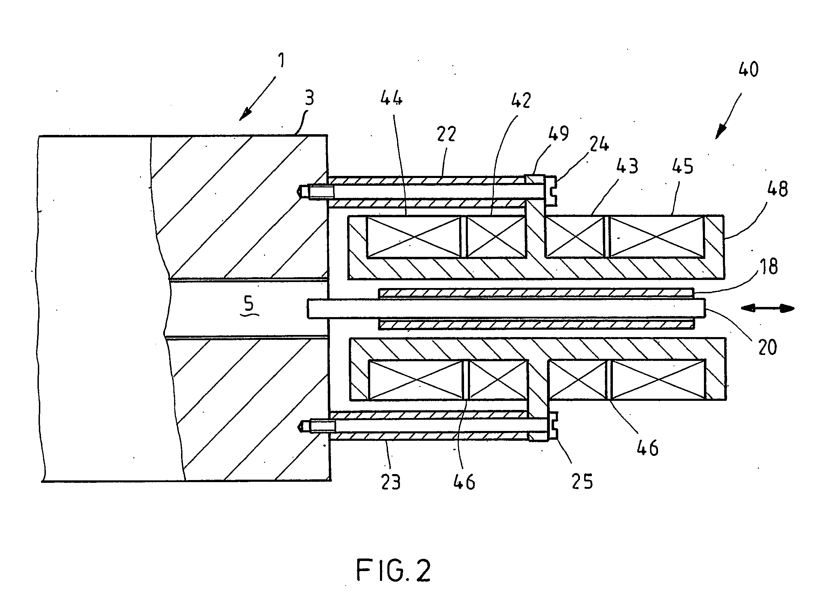

Die erfindungsgemäße Ausgestaltung eines Wegsensors lässt sich ebenso auf einen Differenzialtransformatorwegsensor anwenden. Die Figur 2 zeigt ein Hydraulikventil 1, das mit einem solchen induktiven Wegsensor 40, der nach dem Differenzialtransformatorprinzip arbeitet, ausgestattet ist. Das Ventil 1, der Stabkern 18, 20 und die Befestigungsbuchsen 22 und 23 entsprechen im Wesentlichem dem in Figur 1 gezeigten Aufbau.

Im Gegensatz zu dem Differenzialspulensensor 10, besteht der Spulenkörper des Differenzialtransformatorsensors 40 aus einem Spulenträger 48, auf dem eine Primärspule sowie zwei Sekundärspulen 44 und 45 angeordnet sind. Die Primärspule ist aus zwei Spulenabschnitten 42 und 43, die in Reihe geschaltet sind, gebildet. Die Primärspule 42, 43 ist im mittleren Abschnitt des Spulenkörpers angeordnet, wohingegen die Sekundärspulen 44, 45 jeweils an den Endabschnitten des Spulenkörper vorgesehen sind.

Ein mittlerer Befestigungsabschnitt 49 des Spulenträgers steht flanschartig von dem Spulenkörper vor. Der Befestigungsabschnitt 49 befindet sich in der Mitte des Spulenkörpers. An diesem Befestigungsabschnitt ist der Spulenkörper über die Befestigungsbuchsen 22 und 23 und entsprechende Schrauben 24, 25 mit dem Ventilgehäuse 3 verschraubt.

Zwischen den Primärspulenabschnitten 42, 43 und den Sekundärspulen 44 bzw. 45 sind Trennabschnitte 46 für die spielfreie sowie elektrisch isolierte Lagerung der Spulen vorgesehen. Die Trennabschnitte können einstückig mit dem Spulenträger 48 ausgebildet sein, sodass sich entsprechende Vertiefungen am Spulenträger 48 für das Einpassen der Spulenabschnitte ergeben.

In der Figur 3b ist eine einfache Auswerteschaltung für einen Wegsensor nach dem Differenzialtransformatorprinzip gezeigt. Die Primärspule, die aus den in Reihe geschalteten Spulenabschnitten 42 und 43 besteht, wird mit einer Wechselspannung beaufschlagt. Über den im Inneren des Spulenkörpers beweglichen Stabkern, insbesondere über die ferromagnetische Hülse 18, induziert das von der Primärspule erzeugte Magnetfeld jeweils eine Spannung in den Sekundärspulen 44 und 45. Die in den Sekundärspulen 44 und 45 erzeugte Spannung wird über zwei gegensinnig ausgerichtete Gleichrichterbrücken 34, 35 in ein Gleichspannungssignal umgewandelt. Die gleichgerichteten Spannungen kann man nun über zwei Messwiderstände 36 und 37 vergleichen und den Unterschied durch ein Strommessgerät 38 anzeigen. Befindet sich die Hülse 18 in einer Mittelstellung bezüglich der Primär- und der beiden Sekundärspulen, so wird in beiden Sekundärspulen 44, 45 die gleiche Spannung induziert, und der Wert 0 als Wegsignal ausgegeben. Nach Verschieben der Hülse in Richtung der Spule 44 bzw. der Spule 45 ergibt sich ein Wegsignal mit negativen bzw. positivem Vorzeichen.

Auch bei der Messanordnung nach dem Differenzialtransformatorprinzip lässt sich für die Hülse 18 und die Spulenanordnung jeweils ein Referenzpunkt angeben, deren Versatz das Messsignal bestimmt. Der Referenzpunkt der Hülse 18 liegt dabei in der Hülsenmitte und der Referenzpunkt der Spulenanordnung 42, 43, 44, 45 liegt entlang der Zylinderachse des Spulenkörpers in der Mitte der Spulenanordnung.

Bei dem in Figur 2 gezeigten Wegsensor ist der Spulenkörper ebenfalls über einen in der Mitte des Spulenkörpers angebrachten Befestigungsabschnitt 49 am Ventilgehäuse 3 befestigt. Dadurch bleibt die Lage des Referenzpunkts des Spulenkörpers auch bei einer Temperaturänderung weitestgehend konstant und ist nur durch die Längenausdehnung der Befestigungsbuchsen 22, 23 und Schrauben 24, 25 einer Lageänderung unterworfen. Fertigt man den Stab 20 des Stabkerns aus dem selben Material wie die Befestigungsbuchsen und Schrauben, oder aus einem Material, das einen sehr ähnlichen Wärmausdehnungskoeffizienten aufweist, so verschiebt sich die Lage des Referenzpunkts des Spulenkörpers kaum gegenüber der Lage des Referenzpunkts der Stabkernhülse 18. Somit bleibt auch die Nullpunktslage der Wegsensorkennlinie stabil.

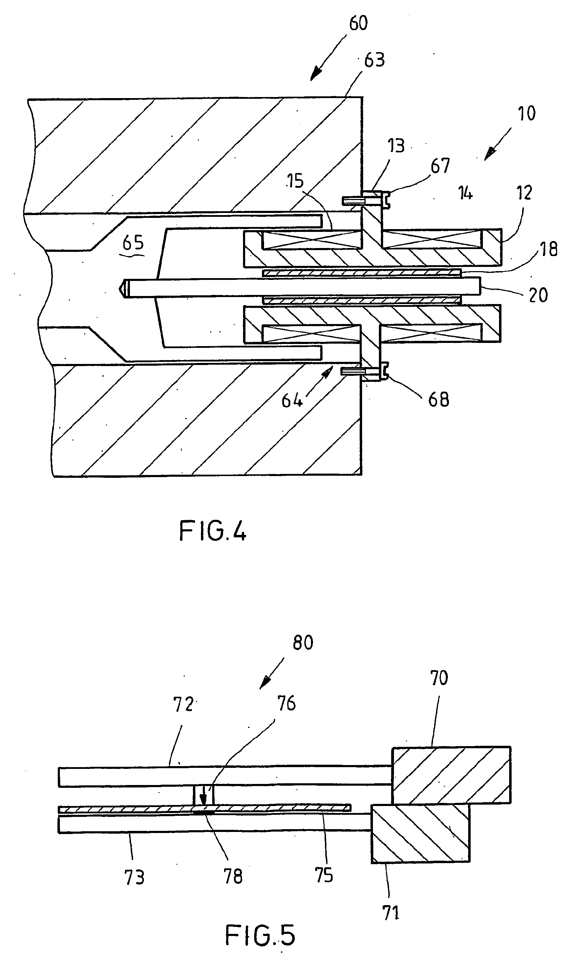

Die Figur 4 zeigt eine weitere Möglichkeit einen Wegsensor so an einem Ventil 60 zu befestigen, dass eine bevorzugte Ventilstellung temperaturunabhängig und zuverlässig erfasst wird. Das Ventil 60 besitzt ein Ventilgehäuse 63, das mit einer Bohrung 64 versehen ist. Der Wegsensor 10, der wie in Figur 1 gezeigt als Differentialspulensensor aufgebaut ist, ist mit seinem mittleren Befestigungsabschnitt 13 direkt an einer außenseitigen Oberfläche des Ventilgehäuses 63 befestigt. Dazu werden Schrauben 67 und 68 verwendet. Der ventilseitige Abschnitt des Spulenkörpers ragt in die Ausnehmung 64 des Ventilgehäuses 63 hinein.

In der Bohrung 64 ist ferner ein Stellglied 65 beweglich geführt. An seinem ventilaußenseitigem Abschnitt ist das Stellglied hohlzylindrisch ausgebildet. Der Spulenkörper ragt in den hohlzylindrischen Abschnitt des Stellglieds 65 hinein. Der Stabkern ist am Boden des hohlzylindrischen Abschnitts befestigt.

Zusätzlich zu den in Bezug auf Figur 1 beschriebenen Vorteilen lässt sich mit einer solchen Anordnung der Platzbedarf für den Wegsensor 10 verringern. In gleicher Weise lässt sich auch der in Figur 2 gezeigte Differentialtransformator-Wegsensor 40 am Ventilgehäuse befestigen.

In der Figur 5 ist als weiteres Beispiel für einen erfindungsgemäßen Wegsensor ein Potentiometer-Wegsensor 80 dargestellt. Gemäß der schematischen Darstellung dient der Wegsensor 80 dazu, die Position eines ersten Körpers 70 gegenüber einem zweiten Körper 71 zu erfassen. Der Wegsensor besteht aus zwei Trägerelementen 72 und 73 die an den ersten Körper 70 bzw. dem zweiten Körper 71 jeweils angebracht sind. An dem ersten Trägerelement 72 ist ein Schleifkontakt 76 gehalten. Das zweite Trägerelement 73 trägt eine elektrische Widerstandsbahn 75. Durch die am Schleifkontakt 76 gemessene Spannung lässt sich die Position des Schleifkontakts auf der Widerstandsbahn und damit die Position des ersten Körpers 70 relativ zum zweiten Körper 71 bestimmen.

Die elektrische Widerstandsbahn 75, die als Kunststoffbahn ausgeführt ist, unterliegt einer gewissen Wärmeausdehnung. Die Widerstandsbahn 75 ist nur an einem vorgegebenen Abschnitt durch eine Klebestelle 78 mit dem darunter liegendem Trägerelement 73 gekoppelt. Dieser befestigte Abschnitt kann sich durch eine Wärmedehnung der Widerstandsbahn 75 nicht verschieben. Der dem befestigten Abschnitt der Widerstandsbahn entsprechende Messwert unterliegt keiner temperaturbedingten Verschiebung. Somit lässt sich eine bevorzugte Position der beiden Körper 70 und 71 zueinander, bei welcher der Kontaktschleifer 76 den befestigten Abschnitt kontaktiert, zuverlässig und temperaturunabhängig messen.

Auch in der Umgebung um die Klebestelle 78 ist die Temperaturabhängigkeit des von der Widerstandsbahn erhaltenen Messsignals noch gering. Die temperaturbedingte Dehnung der Widerstandsbahn und damit die Verfälschung des Messsignals wird umso stärker je weiter entfernt von der Befestigungsstelle 78 der Schleifkontakt 76 an der Widerstandsbahn 75 anliegt. Erfolgt die Befestigung der Widerstandsbahn 75 - wie in Fig. 5 gezeigt - etwa in der Mitte der Bahnlänge, so ergeben sich kleinere temperaturbedingte Höchstfehlerwerte, als wenn die Widerstandsbahn 75 an einem Endabschnitt mit dem Trägerelement 73 verklebt wäre.

### Bezugszeichenliste

- 1: Ventil
- 3: Ventilgehäuse
- 5: Stellglied
- 10: Wegsensor in Differentialspulenanordnung
- 12: Spulenträger
- 13: Befestigungsabschnitt
- 14: Spule
- 15: Spule
- 18: Hülse
- 20: Stab
- 22: Befestigungsbuchse
- 23: Befestigungsbuchse
- 24: Schraube
- 25: Schraube
- 30: Referenzwiderstand
- 31: Referenzwiderstand
- 32: Spannungsquelle
- 34: Gleichrichterbrücke
- 35: Gleichrichterbrücke
- 36: Messwiderstand
- 37: Messwiderstand
- 38: Strommessgerät
- 40: Wegsensor in Differentialtransformatoranordnung
- 42: Primärspulenabschnitt
- 43: Primärspulenabschnitt
- 44: Sekundärspule
- 45: Sekundärspule
- 46: Trennabschnitte
- 48: Spulenträger
- 49: Befestigungsabschnitt
- 60: Ventil
- 63: Ventilgehäuse
- 64: Ausnehmung
- 65: Stellglied
- 67: Schraube
- 68: Schraube
- 70: erster Körper
- 71: zweiter Körper
- 72: erstes Trägerelement
- 73: zweites Trägerelement
- 75: Widerstandsbahn
- 76: Schleifkontakt
- 78: Klebestelle
- 80: Potentiometerwegsensor

## Patentansprüche

1. Wegsensor, der die Position eines ersten Körpers (5; 70) relativ zu einem zweiten Körper (3; 71) durch Ausgabe eines Wegsignals angibt, mit einem ersten Bauteil (18; 76), das an den ersten Körper (5; 70) gekoppelt ist, und mit einem zweiten Bauteil (12; 75), das an den zweiten Körper (3;71) gekoppelt ist, wobei
das zweite Bauteil (12; 75) einen Wärmeausdehnungskoeffizienten aufweist, der sich von einem Wärmeausdehnungskoeffizienten des ersten Bauteils (18; 76) unterscheidet,
am ersten Bauteil (18; 76) ein Referenzpunkt vorgegeben ist,
das Wegsignal durch die Lage des Referenzpunktes gegenüber dem zweiten Bauteil (12; 75) bestimmt ist und
in einer bevorzugten Position des ersten Körpers (5; 70) relativ zum zweiten Körper (3; 71) der Referenzpunkt einem vorgegeben mittleren Abschnitt des zweiten Bauteils (12; 75) gegenüber liegt,
**dadurch gekennzeichnet, dass**
das zweite Bauteil (12; 75) ausschließlich über den vorgegeben Abschnitt mechanisch an den zweiten Körper (3; 71) gekoppelt ist.

2. Wegsensor nach Anspruch 1, **dadurch gekennzeichnet, dass** zwischen dem zweiten Körper (3; 71) und dem vorgegebenen Abschnitt ein Kopplungselement (22, 23; 73) - insbesondere aus einem Metall, das einen geringen Wärmeausdehnungskoeffizient aufweist - angeordnet ist.

3. Wegsensor nach Anspruch 1, **dadurch gekennzeichnet, dass** zwischen dem ersten Körper (5; 70) und dem ersten Bauteil (18; 76) ein weiteres Kopplungselement (20;73) angeordnet ist, und dass die durch Wärmeausdehnung verursachte Längenänderung der beiden Kopplungselemente (22, 23, 20; 72, 73) den gleichen Betrag hat.

4. Wegsensor nach einem der Ansprüche 1 bis 3, **dadurch gekennzeichnet, dass** das zweite Bauteil eine elektrischen Spule (14, 15; 42, 43, 44, 45) mit einem im Wesentlichen hohlzylindrischen Spulenkörper umfasst, und dass das erste Bauteil einen in dem Spulenkörper entlang dessen Zylinderachse beweglich geführten Stabkern (18, 20) umfasst, wobei der Spulenkörper einen Befestigungsabschnitt (13; 49) aufweist, der hinsichtlich der Spulenlängsrichtung mittig am Spulenkörper angeordnet ist.

5. Wegsensor nach Anspruch 4, **dadurch gekennzeichnet, dass** der Befestigungsabschnitt (13; 49) flanschartig vom Spulenkörper vorsteht.

6. Wegsensor nach Anspruch 4 oder 5, **dadurch gekennzeichnet, dass** der Spulenkörper einen Spulenträger (12; 48), der zusammen mit dem Befestigungsabschnitt (13; 49) einstückig ausgebildet ist, aufweist, und dass der Spulenträger (12; 48) auf jeweils beiden Seiten des Befestigungsabschnitts (13; 49) mit Spulen (14, 15; 42, 43, 44, 45) versehen ist.

7. Wegsensor nach einem der Ansprüche 4 bis 6, **dadurch gekennzeichnet, dass** am Befestigungsabschnitt (13; 49) ein sich im Wesentlichen parallel zum Spulenkörper erstreckendes Befestigungselement (22, 23) als Kopplungselement angebracht ist.

8. Wegsensor nach Anspruch 7, **dadurch gekennzeichnet, dass** das Befestigungselement (22, 23) und der Stabkern (18, 20) einen im Wesentlichen gleichen Wärmeausdehnungskoeffizient besitzen.

9. Wegsensor nach einem der Ansprüche 4 bis 8, **dadurch gekennzeichnet, dass** der Spulenkörper eine Differentialspulenanordnung mit zwei in Reihe geschalteten, hinsichtlich ihrer Wicklungszahl und ihrer Abmessung im Wesentlichen gleichen Spulen (14, 15) bildet, wobei jeweils eine der Spulen (14, 15) auf je einer Seite des Befestigungsabschnitts (13) angeordnet ist.

10. Wegsensor nach Anspruch 9, **dadurch gekennzeichnet, dass** der Stabkem einen Stab (20) aus nicht-ferromagnetischem Material und eine Hülse (18) aus ferromagnetischem Material aufweist, und dass eine Mittelstellung der Hülse (18) hinsichtlich der beiden Spulen (14, 15) einem Nullpunkt des Wegsignals entspricht.

11. Wegsensor nach einem der Ansprüche 4 bis 8, **dadurch gekennzeichnet, dass** der Spulenkörper eine Differentialtransformatoranordnung mit einer Primärspule (42, 43) im mittleren Anschnitt des Spulenkörpers und mit jeweils einer Sekundärspule (44, 45) an den äußeren Abschnitten des Spulenkörpers aufweist.

12. Wegsensor nach Anspruch 11, **dadurch gekennzeichnet, dass** die Primärspule zwei in Reihe geschaltete Spulenabschnitte (42, 43) aufweist, die durch den Befestigungsabschnitt (49) getrennt sind.

13. Wegsensor nach Anspruch 11 oder 12, **dadurch gekennzeichnet, dass** der Stabkern einen Stab (20) aus nicht ferromagnetischem Material und eine Hülse (18) aus ferromagnetischem Material aufweist, und dass eine Mittelstellung der Hülse (18) hinsichtlich der beiden Sekundärspulen (44, 45) einem Nullpunkt des Wegsignals entspricht.

14. Wegsensor, nach einem der Ansprüche 1 bis 3, **dadurch gekennzeichnet, dass** das zweite Bauteil eine elektrische Widerstandsbahn (75) umfasst, und dass das erste Bauteil einen Schleifer (76) umfasst, wobei der Referenzpunkt einem Kontaktpunkt des Schleifers (76), mit dem dieser die Widerstandsbahn (75) berührt, entspricht.

15. Ventil, insbesondere Hydraulikventil, mit einem Ventilkörper (3) und mit einem innerhalb des Ventilkörpers (3) beweglich geführten Stellglied (5),
**dadurch gekennzeichnet, dass**
an dem Ventil ein Wegsensor (10; 40), der gemäß wenigstens einem der Ansprüche, 1 bis 14 ausgebildet ist, vorgesehen ist, um die Position des Stellglieds (5) zu messen.

16. Ventil nach Anspruch 15, **dadurch gekennzeichnet, dass** der Wegsensor gemäß wenigstens einem der Ansprüche 4 bis 13 als induktiver Wegsensor (10; 40) ausgebildet ist, und dass der Stabkern (18, 20) am Stellglied (5) befestigt ist.

17. Ventil nach Anspruch 16, **dadurch gekennzeichnet, dass** der Befestigungsabschnitt (13) direkt an dem Ventilgehäuse (63) angebracht ist, und dass ein Abschnitt des Spulenkörpers in eine Ausnehmung (64) im Ventilgehäuse (63) vorsteht.

18. Ventil nach Anspruch 17, **dadurch gekennzeichnet, dass** der Spulenkörper in einen hohlzylindrisch ausgebildeten Abschnitt des Stellglieds (65) vorsteht, und dass der Stabkern (18, 20) an einem Boden des hohlzylindrischen Stellgliedabschnitts befestigt ist.

19. Ventil nach Anspruch 16, **dadurch gekennzeichnet, dass** zwischen dem Ventilkörper (3) und dem Befestigungsabschnitt (13; 49) Befestigungsbuchsen (22, 23) als Kopplungselement vorgesehen sind.

20. Ventil nach Anspruch 19, **dadurch gekennzeichnet, dass** eine durch Wärmeausdehnung der Befestigungsbuchsen (22, 23) verursachte Positionsänderung des Spulenkörpers einer durch Wärmeausdehnung des Stabkerns (18, 20) verursachten Positionsänderung einer ferromagnetischen Hülse (18) des Stabkerns (18, 20) entspricht.

## Claims

1. A displacement sensor which indicates the position of a first body (5; 70) relative to a second body (3; 71) by emitting a displacement signal, having a first component (18; 76) which is coupled to the first body (5; 70) and having a second component (12; 75) which is coupled to the second body (3; 71),
wherein
the second component (12; 75) has a thermal expansion coefficient which differs from a thermal expansion coefficient of the first component (18; 76), a reference point is defined on the first component (18; 76),
the displacement signal is determined by the position of the reference point relative to the second component (12; 75), and
in a preferred position of the first body (5; 70) relative to the second body (3; 71) the reference point lies opposite a defined middle section of the second component (12; 75),
**characterized by the fact that**
the second component (12; 75) is coupled to the second body (3; 71) exclusively via the defined section by mechanical means.

2. A displacement sensor according to claim 1, **characterized by** the fact that between the second body (3; 71) and the defined section there is arranged a coupling element (22, 23; 73) - in particular made of a metal that has a low thermal expansion coefficient.

3. A displacement sensor according to claim 1, **characterized by** the fact that between the first body (5; 70) and the first component (18; 76) there is arranged a further coupling element (20; 73) and that the change in length of the two coupling elements (22, 23, 20; 72, 73) caused by thermal expansion is of the same value.

4. A displacement sensor according to any of claims 1 to 3, **characterized by** the fact that the second component comprises an electrical coil (14, 15; 42, 43, 44, 45) with an essentially hollow cylindrical coil body and that the first component comprises a rod core (18, 20) situated inside the coil body and guided movably along its cylinder axis, the coil body having a fastening section (13; 49) that is arranged centrally on the coil body relative to the longitudinal direction of the coil.

5. A displacement sensor according to claim 4, **characterized by** the fact that the fastening section (13; 49) projects flange-like from the coil body.

6. A displacement sensor according to claim 4 or 5, **characterized by** the fact that the coil body has a coil carrier (12; 48) which is formed in one piece with the fastening section (13; 49) and that the coil carrier (12; 48) is provided in each case with coils (14, 15; 42, 43, 44, 45) on both sides of the fastening section (13; 39).

7. A displacement sensor according to any of claims 4 to 6, **characterized by** the fact that there is attached to the fastening section (13; 49) a fastening element (22, 23) as a coupling element extending essentially parallel to the coil body

8. A displacement sensor according to claim 7, **characterized by** the fact that the fastening element (22, 23) and the rod core (18, 20) have essentially the same thermal expansion coefficient.

9. A displacement sensor according to any of claims 4 to 8, **characterized by** the fact that the coil body forms a differential coil arrangement with two coils (14, 15) connected in series and essentially identical in terms of their number of windings and their dimensions, one of the coils (14, 15) in each case being arranged on one side in each case of the fastening section (13).

10. A displacement sensor according to claim 9, **characterized by** the fact that the rod core has a rod (20) of non-ferromagnetic material and a sleeve (18) of ferromagnetic material and that a middle position of the sleeve (18) relative to the two coils (14, 15) corresponds to a zero point of the displacement signal.

11. A displacement sensor according to any of claims 4 to 8,
**characterized by** the fact that the coil body has a differential transformer arrangement with a primary coil (42, 43) in the middle section of the coil body and with, in each case, a secondary coil (44, 45) on the outer sections of the coil body.

12. A displacement sensor according to claim 11, **characterized by** the fact that the primary coil has two coil sections (42, 43) connected in series which are separated by the fastening section (49).

13. A displacement sensor according to claim 11 or 12, **characterized by** the fact that the rod core has a rod (20) of non-ferromagnetic material and a sleeve (18) of ferromagnetic material and that a middle position of the sleeve (18) relative to the two secondary coils (44, 45) corresponds to a zero point of the displacement signal.

14. A displacement sensor according to any of claims 1 to 3,
**characterized by** the fact that the second component comprises an electrical resistance track (75) and that the first component comprises a slider (76), the reference point corresponding to a contact point of the slider (76) with which it touches the resistance track (75).

15. A valve, in particular a hydraulic valve, with a valve body (3) and with a regulating element (5) guided movably within the valve body (3),
**characterized by the fact that**
there is provided on the valve a displacement sensor (10; 40), which is developed according to at least one of the claims 1 to 14, in order to measure the position of the regulating element (5).

16. A valve according to claim 15, **characterized by** the fact that the displacement sensor is developed as an inductive displacement sensor (10; 40) according to at least one of the claims 4 to 13, and that the rod core (18, 20) is fastened to the regulating element (5).

17. A valve according to claim 16, **characterized by** the fact that the fastening section (13) is attached directly to the valve housing (63) and that a section of the coil body projects into a cavity (64) formed in the valve housing (63).

18. A valve according to claim 17, **characterized by** the fact that the coil body projects into a section of the regulating element (65) developed as a hollow cylinder and that the rod core (18, 20) is fastened to a bottom of the hollow cylindrical regulating element section.

19. A valve according to claim 16, **characterized by** the fact that between the valve body (3) and the fastening section (13; 49) there are provided fastening bushings (22, 23) as coupling elements.

20. A valve according to claim 19, **characterized by** the fact that a change in position of the coil body caused by thermal expansion of the fastening bushings (22, 23) corresponds to a change in position of a ferromagnetic sleeve (18) of the rod core (18, 20) caused by thermal expansion of the rod core (18, 20).

## Revendications

1. Capteur de position, qui donne la position d'un premier corps (5 ; 70) par rapport à un second corps (3 ; 71) par l'émission d'un signal de position, doté d'un premier élément (18 ; 76) constructif relié au premier corps (5; 70) et d'un second élément (12 ; 75) constructif relié au second corps (3 ; 71), cependant que
le second élément (12 ; 75) constructif présente un coefficient de dilatation à la chaleur, qui se distingue d'un coefficient de dilatation à la chaleur du premier élément (18 ; 76) constructif,
un point de référence est donné au niveau du premier élément (18; 76) constructif,
le signal de position est déterminé par la position du point de référence par rapport au second élément (12 ; 75) constructif et
pour une position préférée du premier corps (5 ; 70) par rapport au second corps (3 ; 71), le point de référence est situé en face d'un segment médian donné du second élément constructif (12 ; 75),
**caractérisé en ce que**
le second élément (12 ; 75) constructif est exclusivement relié par voie mécanique, au travers du segment donné, au second corps (3 ; 71).

2. Capteur de position selon la revendication n° 1, **caractérisé en ce qu'**entre le second corps (3 ; 71) et le segment donné est disposé un élément (22, 23 ; 73) d'accouplement - en particulier constitué d'un métal, qui présente un coefficient de dilatation à la chaleur faible.

3. Capteur de position selon la revendication n° 1, **caractérisé en ce qu'**entre le premier corps (5 ; 70) et le premier élément (18 ; 76) constructif est disposé un autre élément (20 ; 73) d'accouplement et que la variation de longueur des deux éléments (22, 23, 20 ; 72', 73) d'accouplement causée par la dilatation à la chaleur présente la même valeur.

4. Capteur de position selon une des revendications n° 1 à 3, **caractérisé en ce que** le second élément constructif présente une bobine (14, 15 ; 42, 43, 44, 45) électrique dotée d'un corps de bobine, qui essentiellement présente une forme de cylindre creux, et que le premier élément constructif présente un noyau (18, 20) droit, qui est guidé dans le corps de bobine de façon à pouvoir coulisser le long de l'axe de cylindre de celui-ci, cependant que le corps de bobine présente un segment (13 ; 49) de fixation, qui est disposé au milieu du corps de bobine en le considérant dans la direction longitudinale de la bobine.

5. Capteur de position selon la revendication n° 4, **caractérisé en ce que** le segment (13 ; 49) de fixation est protubérant par rapport au corps de bobine, tel une bride.

6. Capteur de position selon la revendication n° 4 ou n° 5, **caractérisé en ce que** le corps de bobine présente un porte-bobine (12 ; 48), qui est constitué d'une pièce avec le segment (13; 49) de fixation, et que le porte-bobine (12 ; 48) est doté de bobines (14, 15; 42, 43, 44, 45) de part et d'autre du segment de fixation (13 ; 49).

7. Capteur de position selon une des revendications n° 4 à n° 6, **caractérisé en ce qu'**au niveau du segment (13 ; 49) de fixation est disposé, en tant qu'élément d'accouplement, un élément (22, 23) de fixation, qui s'étend dans une direction essentiellement parallèle au corps de bobine.

8. Capteur de position selon la revendication n° 7, **caractérisé en ce que** l'élément de fixation (22, 23) et le noyau (18, 20) droit présentent essentiellement le même coefficient de dilatation à la chaleur.

9. Capteur de position selon une des revendications n° 4 à n° 8, **caractérisé en ce que** le corps de bobine constitue un dispositif de bobines différentiel doté de deux bobines (14, 15), qui sont essentiellement identiques en termes de nombre d'enroulements et de dimensions et qui sont disposées en série, cependant que chacune des bobines (14, 15) est disposée de façon à ce qu'elles soient réparties de part et d'autre du segment (13) de fixation.

10. Capteur de position selon la revendication n° 9, **caractérisé en ce que** le noyau droit présente une tige (20) en matière non ferromagnétique et une douille (18) en matière ferromagnétique et qu'une position médiane de la douille (18) par rapport aux deux bobines (14, 15) correspond à un point zéro du signal de position.

11. Capteur de position selon une des revendications n° 4 à n° 8, **caractérisé en ce que** le corps de bobine présente un dispositif de transformateur différentiel doté d'une bobine (42, 43) primaire dans la tranchée médiane du corps de bobine et doté de deux bobines (44, 45) secondaires réparties au niveau des segments les plus extérieurs du corps de bobine.

12. Capteur de position selon la revendication n° 11, **caractérisé en ce que** la bobine primaire présente deux segments (42, 43) de bobine branchés en série, qui sont séparés par un segment (49) de fixation.

13. Capteur de position selon la revendication n° 11 ou n° 12, **caractérisé en ce que** le noyau droit présente une tige (20) en matière non ferromagnétique et une douille (18) en matière ferromagnétique et qu'une position médiane de la douille (18) par rapport aux deux bobines (44, 45) secondaires correspond à un point zéro du signal de position.

14. Capteur de position selon une des revendications n° 1 à n° 3, **caractérisé en ce que** le second élément constructif présente une piste (75) de résistance électrique et que le premier élément constructif présente un balai (76), cependant que le point de référence correspond à un point de contact du balai (76), par lequel celui-ci touche la piste (75) de résistance.

15. Valve, en particulier valve hydraulique, dotée d'un corps (3) de valve et d'un élément (5) de régulation guidé à l'intérieur du corps (3) de valve de façon à pouvoir coulisser,
**caractérisée en ce que**
au niveau de la valve est prévu un capteur (10 ; 40) de position, qui est conçu selon au moins une des revendications n° 1 à n° 14, afin de mesurer la position de l'élément (5) de régulation.

16. Valve selon la revendication n° 15, **caractérisée en ce que** le capteur de position est conçu sous forme de capteur (10 ; 40) de position inductif, selon au moins une des revendications n° 4 à n° 13, et que le noyau (18, 20) droit est fixé au niveau de l'élément (5) de régulation.

17. Valve selon la revendication n° 16, **caractérisée en ce que** le segment (13) de fixation est disposé directement au niveau du corps (63) de valve et qu'un segment du corps de bobine est protubérant dans un évidement (64) du corps (63) de valve.

18. Valve selon la revendication n° 17, **caractérisée en ce que** le corps de bobine est protubérant dans un segment de l'élément (65) de régulation, qui est conçu en forme de cylindre creux, et que le noyau (18, 20) droit est fixé sur un fond du segment d'élément de régulation en forme de cylindre creux.

19. Valve selon la revendication n° 16, **caractérisée en ce que** entre le corps (3) de valve et le segment (13 ; 49) de fixation sont prévues des douilles (22, 23) de fixation en tant qu'éléments d'accouplement.

20. Valve selon la revendication n° 19, **caractérisée en ce qu'**une modification de la position du corps de bobine causée par dilatation à la chaleur des douilles (22, 23) de fixation correspond à une modification de la position d'une douille (18) ferromagnétique du noyau (18, 20) droit causée par dilatation à la chaleur du noyau (18, 20) droit.
